# EUROPÄISCHE PATENTSCHRIFT

(11) **EP 1 302 860 B1**
(45) Veröffentlichungstag und Bekanntmachung des Hinweises auf die Patenterteilung: **15.12.2004**
(21) Anmeldenummer: 02022199.0
(22) Anmeldetag: 04.10.2002
(51) Int. Cl.: G06F 13/42

(54) **Vorrichtung zum Rücksetzen von an einen Bus angeschlossenen integrierten Schaltungen**
Device for resetting circuits connected to a bus
Dispositif de remise en état initial des circuits intégrés connectés à un bus

(30) Priorität: 11.10.2001 DE 10150418
(43) Veröffentlichungstag der Anmeldung: 16.04.2003
(73) Patentinhaber: Grundig Multimedia B.V., 1083HJ Amsterdam (NL)
(72) Erfinder: Fischer, Horst, 90449 Nürnberg (DE)
(74) Vertreter: Pröll, Jürgen

(56) Entgegenhaltungen:
- GB-A- 2 268 817
- "The I2C-bus specification" 31. Januar 2000 (2000-01-31) , PHILIPS SEMICONDUCTORS XP002229462 * das ganze Dokument *

## Beschreibung

Die Erfindung betrifft eine Vorrichtung zum Rücksetzen von an einen Bus angeschlossenen integrierten Schaltungen, mit einem Bus, welcher eine Datenleitung und eine Taktleitung aufweist, mehreren an den Bus angeschlossenen integrierten Schaltungen und einem an den Bus angeschlossenen Mikrocontroller.

Integrierte Schaltungen mit I²C-Ansteuerung sind untereinander über einen I²C-Bus miteinander verbunden. Dieser weist eine Datenleitung und eine Taktleitung auf, die jeweils an einen Pullup-Widerstand angeschlossen sind. Folglich werden diese Leitungen dann, wenn die angeschlossenen integrierten Schaltungen störungsfrei arbeiten, nach einer Freigabe auf HIGH-Pegel gezogen. Dadurch wird gewährleistet, dass eine Masterfunktion ausübende integrierte Schaltung, beispielsweise ein Mikrocontroller, jederzeit den Bus ansprechen kann und jede Slavefunktion aufweisende integrierte Schaltung entsprechend antworten kann.
Im Betrieb einer derartigen Vorrichtung können Störungen auftreten. So können eine oder mehrere der integrierten Schaltungen durch einen auftretenden Fehler die Datenleitung oder die Taktleitung dauerhaft auf LOW-Pegel klemmen. In diesem Fall ist keine weitere Kommunikation über den Bus mehr möglich. Der oder die für die Klemmung verantwortlichen integrierten Schaltungen müssen hardwaremäßig rückgesetzt werden. Zu diesem Zweck weisen die an den I²C-Bus angeschlossenen integrierten Schaltungen einen Rücksetzeingang auf. Durch ein derartiges Rücksetzen wird der Bus freigegeben, so dass wieder eine Datenkommunikation über den Bus erfolgen kann.

Es sind bereits Rücksetzschaltungen bekannt, die ihrerseits durch einen I²C-Bus-Befehl geschaltet werden.

Diese dienen dazu, in Ansprache auf einen über den I²C-Bus übertragenen Befehl eine oder mehrere an den I²C-Bus angeschlossenen weitere integrierte Schaltungen in den störungsfreien Betrieb zurückzusetzen. Mittels einer derartigen Rücksetzschaltung können weiterhin auch unzulässige Betriebszustände aufgehoben werden, die nicht auf ein Klemmen des I²C-Busses zurückzuführen sind. Weiterhin ist es mit einer derartigen Lösung auch möglich, gezielt einzelne an den I²C-Bus angeschlossene integrierte Schaltungen rückzusetzen. Der Vorteil dieser Lösung besteht darin, dass auf eine von einem Mikrocontroller ausgehende, zusätzliche Steuerleitung verzichtet werden kann. Ein Nachteil dieser Lösung besteht darin, dass nach einem Klemmen des I²C-Busses ein Rücksetzen der an den I²C-Bus angeschlossenen Schaltungen nicht mehr erfolgen kann.

Soll ein Rücksetzen auch im letztgenannten Fall möglich sein, dann ist dies bei bisher bekannten Lösungen nur mittels einer vom Mikrocontroller ausgehenden zusätzlichen Rücksetzleitung möglich. Dabei muss der Mikrocontroller auch ständig den I²C-Bus auf dessen Kommunikationsfähigkeit hin überprüfen.

Der Erfindung liegt die Aufgabe zugrunde, eine Vorrichtung zum Rücksetzen von an einen Bus angeschlossenen integrierten Schaltungen anzugeben, bei der keine zusätzliche, vom Mikrocontroller ausgehende Rücksetzleitung notwendig ist, um auch beim Vorliegen von Busstörungen ein Rücksetzen der an den Bus angeschlossenen integrierten Schaltungen sicherzustellen.

Diese Aufgabe wird durch eine Vorrichtung mit den im Anspruch 1 angegebenen Merkmalen gelöst. Vorteilhafte Ausgestaltungen und Weiterbildungen der Erfindung ergeben sich aus den abhängigen Ansprüchen. Die Vorteile der Erfindung bestehen insbesondere darin, dass auch beim Vorliegen von Bussstörungen ein Rücksetzen aller an den Bus angeschlossenen integrierten Schaltungen erfolgen kann, ohne dass die Notwendigkeit besteht, einen ebenfalls an den Bus angeschlossenen Mikrocontroller mit einem zusätzlichen Ausgangsanschluss zu versehen und ohne dass eine vom Mikrocontroller ausgehende gesonderte Rücksetzleitung notwendig ist.

Letzteres ist insbesondere dann vorteilhaft, wenn der Mikrocontroller örtlich weit entfernt von den an den Bus angeschlossenen integrierten Schaltungen ist, wie es beispielsweise bei Anlagen zum Gemeinschaftsempfang von Satellitenrundfunksignalen der Fall sein kann. Der beanspruchte Buszustandsdetektor kann in vorteilhafter Weise in der Nähe der genannten integrierten Schaltungen angeordnet sein.

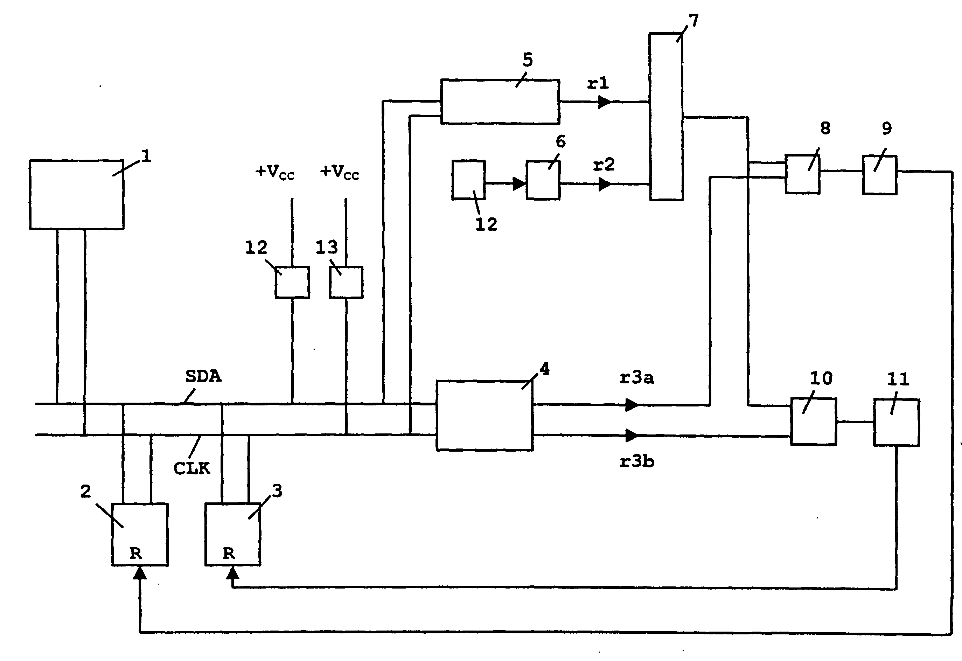

Weitere vorteilhafte Eigenschaften der Erfindung ergeben sich aus der nachfolgenden Erläuterung der Erfindung anhand des in der Figur gezeigten Ausführungsbeispiels.

Die Figur zeigt ein Blockschaltbild einer Vorrichtung zum Rücksetzen von an einen Bus angeschlossenen integrierten Schaltungen. Bei diesem Bus handelt es sich um einen I²C-Bus, welcher eine Datenleitung SDA und eine Taktleitung CLK aufweist. An diese Leitungen sind ein Mikrocontroller 1, eine erste integrierte Schaltung 2 und eine zweite integrierte Schaltung 3 angeschlossen. Die erste integrierte Schaltung 2 und die zweite integrierte Schaltung 3 weisen jeweils einen Rücksetzeingang R auf. Die Datenleitung SDA ist über einen Pullup-Widerstand 12 mit einem Bezugspotential +V_{CC} verbunden. Die Taktleitung CLK steht über einen Pullup-Widerstand 13 mit dem Bezugspotential +V_{CC} in Verbindung.

Die Busleitungen SDA und CLK weisen im Ruhezustand HIGH-Pegel auf. Wenn eine der an den Bus angeschlossenen integrierten Schaltungen Daten über den Bus übertragen möchte, erfolgt in der jeweiligen integrierten Schaltung ein Durchschalten eines Transistors, wodurch die jeweilige Busleitung auf den LOW-Pegel gezogen wird. Nach Abschluss der Datenübertragung wird der genannte Transistor wieder gesperrt. Dies hat zur Folge, dass die jeweilige Busleitung, die über den genannten Pullup-Widerstand mit dem Bezugspotential +V_{CC} verbunden ist, wieder auf den HIGH-Pegel gezogen wird.

Tritt eine Betriebsstörung in einer der integrierten Schaltungen auf, aufgrund derer der genannte Transistor in der integrierten Schaltung im durchgeschalteten Zustand verbleibt, dann wird die betroffene Busleitung auf den LOW-Pegel geklemmt, so dass keine weitere Datenübertragung über den Bus erfolgen kann.

Ein Aufheben dieser Busblockierung kann nur dadurch erfolgen, dass den an den Bus angeschlossenen integrierten Schaltungen 2, 3 ein Rücksetzsignal zugeführt wird. Da nicht bekannt ist, welche der integrierten Schaltungen der Auslöser dieser Blockierung ist, müssen alle an den Bus angeschlossenen integrierten Schaltungen rückgesetzt werden.

### Dies geschieht wie folgt:

An die Busleitungen SDA und CLK ist ein Buszustandsdetektor 5 angeschlossen, mittels dessen eine Busblockierung erkannt wird. Dieser weist ein mit der jeweiligen Busleitung verbundenes retriggerbares Monoflop auf. Dieses überwacht die Dauer der auf der jeweiligen Busleitung auftretenden LOW-Zustände. Überschreitet die Dauer eines LOW-Zustandes einen vorgegebenen Schwellenwert, dann liegt eine Busblockierung vor.

Um diese Überprüfung vornehmen zu können, wird das retriggerbare Monoflop beim Auftreten einer HIGH-LOW-Flanke des auf der jeweiligen Busleitung übertragenen Signals gestartet. Die Zeitkonstante dieses retriggerbaren Monoflops ist derart eingestellt, dass sie größer ist als eine Zeitdauer, die einer maximal zugelassenen Dauer der LOW-Phase des auf der jeweiligen Busleitung übertragenen Signals entspricht. Kippt das retriggerbare Monoflop wieder in seinen Ausgangszustand zurück, wenn eine der Busleitungen immer noch LOW-Pegel aufweist, dann wird über ein weiteres Monoflop ein erstes Rücksetzsignal r1 am Ausgang des Buszustandsdetektors 5 zur Verfügung gestellt. Dieses wird über ein ODER-Glied 7, ein ODER-Glied 8 und einen Monoflop 9 dem Rücksetzeingang R der ersten integrierten Schaltung 2 und über das ODER-Glied 7, ein ODER-Glied 10 und einen Monoflop 11 dem Rücksetzeingang R der zweiten integrierten Schaltung 3 zugeführt. Mittels des ersten Rücksetzsignals r1 werden folglich beim Erkennen einer Busstörung alle an den Bus angeschlossenen integrierten Schaltungen rückgesetzt.

Eine vorteilhafte Weiterbildung der Erfindung besteht darin, dass die Rücksetzvorrichtung weiterhin eine Einschalt-Rücksetzeinheit 6 aufweist. Diese enthält ein Monoflop, welches durch das Einschalten der Versorgungsspannung mittels eines Schalters 12 gestartet wird.

Nach einer einstellbaren Zeit, die so gewählt wird, dass alle Schaltungsteile im eingeschwungenen Zustand sind, wird ein zweites Monoflop angestoßen, welches einen Impuls festgelegter Länge ausgibt. Dieser wird als zweites Rücksetzsignal r2 am Ausgang der Einschalt-Rücksetzeinheit 6 zur Verfügung gestellt. Dieses zweite Rücksetzsignal r2 wird über das ODER-Glied 7, das ODER-Glied 8 und das Monoflop 9 an den Rücksetzeingang R der ersten integrierten Schaltung 2 und über das ODER-Glied 7, das ODER-Glied 10 und das Monoflop 11 an den Rücksetzeingang R der zweiten integrierten Schaltung 3 angelegt. Auch das zweite Rücksetzsignal r2 dient folglich zum Rücksetzen aller an den Bus angeschlossenen integrierten Schaltungen.

Auch dann, wenn es zu kurzzeitigen Stromversorgungsunterbrechungen kommt, generiert die Einschalt-Rücksetzeinheit 6 ein Rücksetzsignal r2 für die an den Bus angeschlossenen integrierten Schaltungen.

Alternativ zur vorgenannten Einschalt-Rücksetzeinheit 6 kann die Vorrichtung auch einen Rücksetzcontroller aufweisen, der ein Rücksetzen aller an den Bus angeschlossenen integrierten Schaltungen über den Bus durchführt.

Eine vorteilhafte Weiterbildung der Erfindung besteht darin, dass die Vorrichtung zusätzlich eine busgesteuerte Rücksetzeinheit 4 aufweist, die zur Ausgabe von dritten Rücksetzsignalen r3a und r3b vorgesehen ist. Mittels dieser dritten Rücksetzsignale sind die an den Bus angeschlossenen integrierten Schaltungen individuell rücksetzbar. Die zugehörigen Rücksetzbefehle werden in dem Masterfunktion ausübenden Mikrocontroller 1 generiert und über den Bus an die Rücksetzeinheit 4 geleitet. Dort werden die Rücksetzbefehle in ein oder mehrere dritte Rücksetzsignale umgesetzt und über das ODER-Glied 8 und das Monoflop 9 bzw. das ODER-Glied 10 und das Monoflop 11 an die Rücksetzeingänge der integrierten Schaltung 2 bzw. der integrierten Schaltung 3 weitergeleitet. Auf diese Weise können softwaremäßig über den I²C-Bus gezielt einzelne integrierte Schaltungen rückgesetzt werden.

Eine Besonderheit dieser Rücksetzung ist darin zu sehen, dass nur die Einleitung der Rücksetzung funktional wichtig ist. Durch diese Einleitung der Rücksetzung wird ein in der Rücksetzeinheit 4 enthaltenes Monoflop gestartet, welches die Rücksetzphase ausführt und auch beendet.

Dadurch wird verhindert, dass dann, wenn während der Rücksetzphase ein unkontrollierter Zustand einer der an den Bus angeschlossenen Schaltungen auftritt, ein plötzliches Klemmen des I²C-Busses ein Beenden der Rücksetzphase unmöglich macht.

Die vom Buszustandsdetektor 5, der Einschalt-Rücksetzeinheit 6 und der busgesteuerten Rücksetzeinheit 4 gelieferten Ausgangssignale werden beim gezeigten Ausführungsbeispiel logisch verknüpft, so dass die Gesamtvorrichtung folgendes Rücksetzverhalten aufweist:
- die an den Bus angeschlossenen integrierten Schaltungen können einzeln und gezielt über die busgesteuerte Rücksetzeinheit 4 rückgesetzt werden;
- alle an den Bus angeschlossenen integrierten Schaltungen können gleichzeitig gemeinsam über die Einschalt-Rücksetzeinheit 6 rückgesetzt werden;
- alle an den Bus angeschlossenen integrierten Schaltungen können gleichzeitig gemeinsam über den Buszustandsdetektor 5 rückgesetzt werden, wenn eine Busstörung dadurch auftritt, dass durch eine beliebige der integrierten Schaltungen die Datenleitung SDA und/oder die Taktleitung CLK unzulässig lange Zeit auf LOW-Pegel geklemmt wird;
- alle vorgenannten Rücksetzungen wirken auslösend auf ein Monoflop, durch welches die eigentliche Rücksetzung durchgeführt und beendet wird.

Die Vorteile der Erfindung bestehen insbesondere darin, dass keine zusätzliche, vom Mikrocontroller ausgehende Rücksetzleitung notwendig ist. Das System überwacht sich selbst und löst bei einem Klemmen des Busses einen Hardware-Reset aus. Ein Auslösen eines über den Bus herbeigeführten, von außen initiierten Resets ist ohne weiteres zusätzlich möglich.

## Patentansprüche

1. Vorrichtung zum Rücksetzen von an einen Bus angeschlossenen integrierten Schaltungen, mit
- einem Bus, welcher eine Datenleitung und eine Taktleitung aufweist,
- mehreren an den Bus angeschlossenen integrierten Schaltungen und
- einem an den Bus angeschlossenen Mikrocontroller,
**dadurch gekennzeichnet, dass**
sie weiterhin
- einen Buszustandsdetektor (5) aufweist, welcher beim Vorliegen einer Busstörung ein erstes Rücksetzsignal (r1) zum Rücksetzen der an den Bus angeschlossenen integrierten Schaltungen (2, 3) ausgibt.

2. Vorrichtung nach Anspruch 1,
**dadurch gekennzeichnet, dass**
die Datenleitung (SDA) und die Taktleitung (CLK) jeweils über einen Widerstand (12, 13) mit einem Bezugspotential verbunden sind und der Buszustandsdetektor (5) zur Messung der Dauer der LOW-Zustände auf der Datenleitung und auf der Taktleitung vorgesehen ist.

3. Vorrichtung nach Anspruch 2,
**dadurch gekennzeichnet, dass**
der Buszustandsdetektor (5) ein retriggerbares Monoflop aufweist, welches durch die HIGH-LOW-Flanken des auf dem Bus übertragenen Signals gestartet wird.

4. Vorrichtung nach Anspruch 3,
**dadurch gekennzeichnet, dass**
das retriggerbare Monoflop eine Zeitkonstante hat, die größer ist als eine Zeitdauer, die einer maximal zugelassenen Dauer der LOW-Phase des auf dem Bus übertragenen Signals entspricht, und dass das retriggerbare Monoflop über ein weiteres Monoflop das erste Rücksetzsignal (r1) für die an den Bus angeschlossenen integrierten Schaltungen auslöst, wenn die Zeitdauer des LOW-Zustands einer der Busleitungen größer ist als die maximal zugelassene Dauer der LOW-Phase.

5. Vorrichtung nach einem der vorhergehenden Ansprüche,
**dadurch gekennzeichnet, dass**
sie weiterhin eine Einschalt-Rücksetzeinheit (6) aufweist, die nach einem Einschalten der Vorrichtung ein zweites Rücksetzsignal (r2) zum Rücksetzen der an den Bus angeschlossenen integrierten Schaltungen (2, 3) ausgibt.

6. Vorrichtung nach Anspruch 5,
**dadurch gekennzeichnet, dass**
das erste Rücksetzsignal (r1) und das zweite Rücksetzsignal (r2) den an den Bus angeschlossenen integrierten Schaltungen (2, 3) über ein erstes ODER-Glied (7) zugeführt werden.

7. Vorrichtung nach einem der vorhergehenden Ansprüche,
**dadurch gekennzeichnet, dass**
sie weiterhin eine busgesteuerte Rücksetzeinheit (4) aufweist, die zur Ausgabe von dritten Rücksetzsignalen (r3a, r3b) vorgesehen ist, mittels welcher die an den Bus angeschlossenen integrierten Schaltungen (2, 3) individuell rücksetzbar sind.

8. Vorrichtung nach Anspruch 7,
**dadurch gekennzeichnet, dass**
jedes der dritten Rücksetzsignale (r3a, r3b) einem weiteren ODER-Glied (8, 10) zugeführt ist und dem jeweiligen weiteren ODER-Glied (8, 10) auch die vom ersten ODER-Glied (7) erhaltenen Signale zugeführt sind.

9. Vorrichtung nach Anspruch 8,
**dadurch gekennzeichnet, dass**
die weiteren ODER-Glieder (8, 10) jeweils über ein Monoflop (9, 11) mit den Rücksetzeingängen (R) der an den Bus angeschlossenen integrierten Schaltungen (2, 3) verbunden sind.

## Claims

1. Device for resetting integrated circuits connected to a bus, comprising
- a bus that has a data line and a clock line,
- a plurality of integrated circuits connected to the bus and
- a microcontroller connected to the bus,
**characterized in that**
it furthermore
- has a bus state detector (5) that, if there is a bus defect, emits a first reset signal (r1) to reset the integrated circuits (2, 3) connected to the bus.

2. Device according to Claim 1, **characterized in that** the data line (SDA) and the clock line (CLK) are each connected via a resistor (12, 13) to a reference potential and the bus state detector (5) is provided for measuring the duration of the LOW states on the data line and on the clock line.

3. Device according to Claim 2, **characterized in that** the bus state detector (5) has a retriggerable monoflop that is started by the HIGH-LOW edges of the signal transmitted on the bus.

4. Device according to Claim 3, **characterized in that** the retriggerable monoflop has a time constant that is greater than a time duration that corresponds to a maximum permitted duration of the LOW phase of the signal transmitted on the bus and **in that** the retriggerable monoflop initiates the first reset signal (r1) for the integrated circuits connected to the bus via a further monoflop if the time duration of the LOW state of one of the bus lines is greater than the maximum permitted duration of the LOW phase.

5. Device according to any one of the preceding claims, **characterized in that** it furthermore has a switch-on reset unit (6) that emits a second reset signal (r2) for resetting the integrated circuits (2, 3) connected to the bus after the device switches on.

6. Device according to Claim 5, **characterized in that** the first reset signal (r1) and the second reset signal (r2) are fed via a first OR element (7) to the integrated circuits (2, 3) connected to the bus.

7. Device according to any one of the preceding-claims, **characterized in that** it furthermore has a bus-controlled reset unit (4) that is provided for emitting third reset signals (r3a, r3b) by means of which the integrated circuits (2, 3) connected to the bus are individually resettable.

8. Device according to Claim 7, **characterized in that** each of the third reset signals (r3a, r3b) is fed to a further OR element (8, 10) and the signals received by the first OR element (7) are also fed to the respective further OR element (8, 10).

9. Device according to Claim 8, **characterized in that** the further OR elements (8, 10) are each connected via a monoflop (9, 11), to the reset inputs (R) of the integrated circuits (2, 3) connected to the bus.

## Revendications

1. Dispositif pour ramener à l'état initial des circuits intégrés connectés à un bus, comportant:
- un bus, qui comporte une ligne de transmission de données et une ligne de transmission de cadence,
- plusieurs circuits intégrés connectés au bus, et
- un microcontrôleur connecté au bus,
**caractérisé en ce qu'**il comporte en outre
- un détecteur d'état de bus (5), qui dans le cas de la présence d'une perturbation dans le bus, délivre un premier signal de remise à l'état initial (r1) pour ramener à l'état initial les circuits intégrés (2, 3) connectés au bus.

2. Dispositif selon la revendication 1, **caractérisé en ce que** la ligne de transmission de données (SDA) et la ligne de transmission de cadence (CLK) sont reliées respectivement à un potentiel de référence et le détecteur (5) d'état du bus est prévu pour la mesure de la. durée des états au niveau BAS dans la ligne de transmission de données et dans la ligne de transmission de cadence.

3. Dispositif selon la revendication 2, **caractérisé en ce que** le détecteur (5) d'état du bus comporte un multivibrateur monostable redéclenchable, qui est déclenché par les flancs niveau HAUT - niveau BAS du signal transmis au bus.

4. Dispositif selon la revendication 3, **caractérisé en ce que** le multivibrateur monostable redéclenchable possède une constante de temps, qui est supérieure à une durée, qui correspond à la durée maximale autorisée de la phase à niveau BAS du signal transmis dans le bus et que le multivibrateur monostable redéclenchable déclenche, par l'intermédiaire d'un autre multivibrateur monostable, le premier signal de remise à l'état initial (r1) pour les circuits intégrés connectés au bus, lorsque la durée de l'état à niveau BAS de l'une des lignes du bus est supérieure à la durée maximale admissible de la phase à niveau BAS.

5. Dispositif selon l'une des revendications précédentes, **caractérisé en ce qu'**il comporte en outre une unité (6) de remise à l'état initial de branchement, qui après un branchement du dispositif, délivre un second signal de remise à l'état initial (r2) servant à ramener à l'état initial les circuits intégrés (2, 3) connectés au bus.

6. Dispositif selon la revendication 5, **caractérisé en ce que** le premier signal de remise à l'état initial (r1) et le second signal de remise à l'état initial (r2) sont envoyés aux circuits intégrés (2, 3) connectés au bus, par l'intermédiaire d'un premier circuit OU (7).

7. Dispositif selon l'une des revendications précédentes, **caractérisé en ce qu'**il comporte en outre une unité de remise à l'état initial (4) commandée par le bus et qui est prévue pour la délivrance de troisièmes signaux de remise à l'état initial (r3a, r3b), à l'aide desquels les circuits intégrés (2, 3) connectés au bus peuvent être ramenés individuellement à l'état initial.

8. Dispositif selon la revendication 7, **caractérisé en ce que** chacun des troisièmes signaux de remise à l'état initial (r3a, r3b) est envoyé à un autre circuit OU (8, 10) et que les signaux fournis par le premier circuit OU (7) sont également envoyés à l'autre circuit OU respectif (8, 10).

9. Dispositif selon la revendication 8, **caractérisé en ce que** les autres circuits OU (8, 10) sont reliés respectivement par l'intermédiaire d'un multivibrateur monostable (9, 11) aux entrées de remise à l'état initial (R) des circuits intégrés (2, 3) connectés au bus.
